## Europäisches Patentamt
## European Patent Office
## Office européen des brevets

(19)

(11) Veröffentlichungsnummer: **0 035 654**
**B1**

(12) **EUROPÄISCHE PATENTSCHRIFT**

(45) Veröffentlichungstag der Patentschrift: **28.08.85**

(51) Int. Cl.⁴: **C 08 J 3/22, C 09 B 67/20**

(21) Anmeldenummer: **81100888.7**

(22) Anmeldetag: **09.02.81**

(54) **Farbmittelpräparationen, Verfahren zu ihrer Herstellung sowie ihre Verwendung zum Färben von Kunststoffen.**

(30) Priorität: **16.02.80 DE 3005908**

(43) Veröffentlichungstag der Anmeldung:
**16.09.81 Patentblatt 81/37**

(45) Bekanntmachung des Hinweises auf die
Patenterteilung:
**28.08.85 Patentblatt 85/35**

(84) Benannte Vertragsstaaten:
**CH DE FR GB IT LI**

(56) Entgegenhaltungen:
**DE-A-2 441 780**
**DE-A-2 740 043**
**US-A-3 956 008**
**US-A-4 167 503**

**Die Akte enthält technische Angaben, die nach
dem Eingang der Anmeldung eingereicht
wurden und die nicht in dieser Patentschrift
enthalten sind.**

(73) Patentinhaber: **BAYER AG
Konzernverwaltung RP Patentabteilung
D-5090 Leverkusen 1 Bayerwerk (DE)**

(72) Erfinder: **Kressner, Michael
Foerstchen 33a
D-5653 Leichlingen 1 (DE)**
Erfinder: **Kolbe, Joachim, Dr.
Domblick 23
D-5090 Leverkusen 31 (DE)**
Erfinder: **Bremer, Fritz, Dr.
Paul-Klee-Strasse 64
D-5090 Leverkusen 1 (DE)**
Erfinder: **Pape, Georg, Dr.
Imbach 43
D-5090 Leverkusen 31 (DE)**
Erfinder: **Wolf, Karlheinz, Dr.
Paul-Klee-Strasse 77
D-5090 Leverkusen 1 (DE)**
Erfinder: **Kümmeler, Ferdinand
Rheindorfer Strasse 63a
D-5090 Leverkusen 1 (DE)**

Courier Press, Leamington Spa, England.

**Beschreibung**

Die vorliegende Erfindung betrifft Präparationen von in Wasser schwer- oder unlöslichen Farbmitteln, Verfahren zu ihrer Herstellung sowie ihre Verwendung zum Färben von Kunststoffen insbesondere Thermoplasten.

Aus der DE—A—2 441 780 sind Farbstoffpräparationen aus in Wasser schwerlöslichen Farbstoffen und Polyetherpolyolen, die durch Addition von Ethylenoxid und Propylenoxid an Startmoleküle mit einer Funktionalität >2 erhalten werden, bekannt. Speziell nennt diese Literturstelle eine Farbstoffpräparation, die ein Gemisch aus einem Ethylenoxidanlagerungsprodukt von Trimethylolpropan und aus einem gemischten Ester des Trimethylolpropans enthält. Aus der US—PS 3 956 008 sind Farbmittelpräparationen bekannt, die einen Weichmacher auf Esterbasis und ethoxyliertes Sobitantrioleat enthalten.

Die neuen Präparationen enthalten

A) ein in Wasser schwer- oder unlösliches Farbmittel,
B) einen Weichmacher auf Esterbasis und
C) ein Umsetzungsprodukt eines Glycerinfettsäureesters mit Ethylenoxid.

Vorzugsweise liegen die neuen Präparationen in Form von Dispersionen vor, die, bezogen auf das Gesamtgewicht der Komponenten A+B+C, 5—70 Gew.—%, besonders bevorzugt 10—60 Gew.—% A, 30—95 Gew—%, besonder bevorzugt 40—90 Gew.—% B und 0,1—10 Gew.—%, besonder bevorzugt 0,5—5 Gew.—% C enthalten. Die Viskosität der Präparationen liegt bevorzugt zwischen etwa 1000 und etwa 200 mPa.s.

Als Farbmittel werden in die Präparationen Dispersions-farbstoffe und vorzugsweise Pigmente eingesetzt.

Geeignete organische Pigmente sind z.B. solche der Azo-, Anthrachinon-, Azaporphin-, Thioindigo- oder polycyclischen Reihe; ferner der Chinacridon-, Dioxazin- Naphthalintetracarbonsäure- oder Perylentetracarbonsäure-Reihe sowie verlackte Farbstoffe wie Ca-, Mg- und Al-Lacke von sulfonsäure- und/oder carbonsäuregruppenhaltigen Farbstoffen.

Geeignete anorganische Pigmente sind beispielsweise Zinksulfide, Cadmiumsulfide-/selenide, Ultramarin, Titandioxide, Eisenoxide, Nickel- oder Chromtitangelb, Kobaltblau, Chromoxide und Chromatpigmente. Auch Ruß kann in de neuen Präparationen Verwendung finden.

Die in die erfindungsgemäßen Präparationen eingesetzten Weichmacher auf Esterbasis sind solche, die üblicherweise bei der Verarbeitung von Kunststoffen eingesetzt werden Beispielhaft seien genannt: Adipinsäureester, Phosphorsäureester wie Trikresylphosphat, Phthalsäureester wie Dibutyl- und Dioctylphthalat, Sulfonsäureester sowie polymere Weichmacher aus polyfunktionellen Carbonsäuren und Polyalkoholen. Bevorzugte Verwendung findet Diisooctyladipat.

Die den erfindungsgemäß einzusetzenden Umsetzungsprodukten von Glycerinfettsäureestern mit Ethylenoxid zugrunde liegenden Glycerinfettsäureester können sowohl natürlicher als auch synthetischer Herkunft sein.

Das Glycerin kann sowohl partiell als auch vollständig verestert sein.

Als Fettsäuren sind im Rahmen dieser Erfindung insbesondere gesättigte und ungesättigte Monocarbonsäuren mit bis zu etwa 18 C-Atomen von Interesse.

Als Beispiele für Glycerinfettsäureester seien genannt: Mono-, Di- und Tristearoylglycerin, Mono-, Di- und Trioleoylglycerin, Mono-, Di- und Triricinoleoylglycerin.

In die erfindungsgemäßen Pigmentpräparationen werden bevorzugt Umsetzungsprodukte von Fetten und/oder Esterölen mit Ethylenoxid eingesetzt. Beispiele für diesen Umsetzungsprodukten zugrunde liegenden Fette und Öle sind: Sojaöl, Palmöl, Kokosöl, Olivenöl Erdnußöl, Leinöl, Lebertran, Rindertalg, Schweineschmalz, Besonders bevorzugte Verwendung findet ethoxyliertes Ricinusöl.

Die erfindungsgemäß einsetzbaren Umsetzungsprodukte von Glycerinfettsäureestern mit Ethylenoxid haben vorzugsweise Molekulargewichte zwischen etwa 100 und etwa 2000 g/Mol. Sie sind beispielsweise dadurch erhältlich, daß man Glycerinfettsäureester mit Ethylenoxid unter alkalischer Katalyse bei etwa 100 bis etwa 150°C in der Weise umsetzt, daß pro M Fettsäureester etwa 3 bis etwa 25 M Ethylenoxid angelagert werden.

Bevorzugte Verwendung findet das Umsetzungsprodukt aus Ricinusöl und Ethylenoxid, bei dem pro M Ricinusöl etwa 4 bis etwa 10 M Ethylenoxid angelagert worden sind.

Die erfindungsgemäßen Präparationen können weiterhin übliche Zusatzstoffe wie Konservierungsmittel, viskositätsregulierende Zuschlagstoffe wie Siliciumdioxid oder Streckmittel wie Bariumsulfat und Kreide enthalten.

Die Herstellung der neuen Farbmittelpräparationen erfolgt in üblichen Naßzerkleinerungsaggregaten, wie Attritoren, Walzenstühlen, Dissolvern, Rotor - Stator - Mühlen, Korundscheibenmühlen, Kugelmühlen sowie in schnell - laufenden Rührwerksmühlen, mit Umfanggeschwindigkeiten von 5—60 m/Sek., bevorzugt 10—20 m/Sek., die Mahlkörper in der Größe von etwa 0,1—10 mm Durchmesser, bevorzugt 0,5—1,2 mm, aus Stahl Glas, Keramik, Sand oder Kunststoff enthalten. Geeignete Rührwerksmühlen sind beispielsweise in Farbe und Lack 71, Seiten 275 ff. und Seiten 464 ff., Farbe und Lack 75, Seiten 953 ff., sowie in der DE—AS 12 30 657 beschrieben.

Die Farbmittelpräparationen eignen sich insbesondere zum Färben und Pigmentieren von Kunststoffen, insbesondere Thermoplasten. Als Beispiele seien genannt: Polyvinylchlorid, Polyolefine, Poly(meth)acrylat, Polyurethan- und Polyesterharze sowie insbesondere Homo- und Copolymerisate von Styrol wie Polystyrol und ABS. Dazu werden sie Kunststoffgranulaten in geeigneten Mischvorrichtungen zugegeben und die so erhaltenen Gemische mit Hilfe von geeigneten Kunststoffverarbeitungsmaschinen wie Spritzgußmaschinen und Extrudern zu den gewünschten farbigen Formteilen weiterverarbeitet.

Die neuen Präparationen zeichnen sich auch in höheren Dosierungen durch gute Verträglichkeit mit dem zu färbenden oder pigmentierenden Kunststoffsubstrat aus. Weiterhin sind sie gut fließfähig.

Überraschenderweise zeigt eine erfindungsgemäße Farbmittelpräparation, die im Unterschied zu Beispiel 14 der US—PS 3 956 008 an Stelle von ethoxyliertem Sorbitantrioleat ethoxyliertes Ricinusöl enthält, im Vergleich zu diesem Beispiel eine verbesserte Fließfähigkeit.

Beispiel 1

50 Teile Cadmiumsulfid-Pigment werden mit 4 Teilen einer hochdispersen Kieselsäure mit einer Oberfläche von etwa 600 m²/g und 13 Teilen Trioctylphosphat in einem Dispersionskneter so lange intensiv dispergiert, bis eine durchschnittliche Teilchengröße des Pigmentes von etwa 1 μ erreicht ist. Dann wird die zähe Paste mit weiteren 32 Teilen Trioctylphosphat und zusätzlich mit 1 Teil Ricinusöl, das mit 10 M Ethylenoxid umgesetzt wurde, zu einer fließfähigen Paste verdünnt.

Diese Paste wird in einem überkopfmischer oder Turbo-Mischer mit Kunststoffen, wie Polystyrol, Polyolefinen, Polyvinylchlorid oder Polymethacrylat, vermischt. Nach der Vermischung haftet die Farbpaste fest an der Oberfläche des Kunststoffgranulats, so daß eine Weiterverarbeitung auf einem Extruder oder einer Spritzgußmaschine vorgenommen werden kann. Man erhält gleichmäßig und stippenfrei gefärbte Kunststoffe.

Beispiel 2

60 Teile Cadmiumsulfid-selenid-Pigment werden mit 2,4 Teilen einer hochdispersen Kieselsäure mit einer Oberfläche von etwa 600 m²/g und 15 Teilen Tri-n-butylphosphat wie in Beispiel 1 angegeben verarbeitet. Zur Erzielung einer fließfähigen Paste werden anschließend 22 Teile Tri-n-butylphosphat und 0,6 Teile Tristearoylglycerin, das mit 8 M Ethylenoxid umgesetzt wurde, zugegeben.

Die erhaltene Paste eignet sich sehr gut zum Einfärben von weichgemachtem Polyvinylchlorid, insbesondere wenn dieses für die Streichstoffindustrie eingesetzt werden soll. Zu diesem Zweck werden Polyvinylchlorid-Pasten in der üblichen Konsistenz, die für das Bestreichen von Textilien und anderen Stoffen geeignet ist, vom Hersteller des Polyvinylchlorids an den Weiterverarbeiter geliefert. Die nach den Angaben dieses Beispiels erhaltene Farbpaste wird zweckmäßig unter Mitverwendung eines Rührwerkes oder von Hand in das PVC-Weichmachergemisch eingerührt. Die so erhaltene, eingefärbte PVC-Mischung kann nun direkt auf das Textilgewebe oder sonstige Stoffe aufgestrichen werden; der erzielte Aufstrich ist stippenfrei. Auch die unter Beispiel 1 genannten Kunststoffe sind mit obiger Farbpaste stippenfrei einzufärben.

Beispiel 3

18 Teile Kupferphthalocyanin werden mit 10 Teilen Diisooctylphthalat wie in Beispiel 1 angegeben verarbeitet. Nach Erreichung der gewünschten Feinheit das Pigments verdünnt man mit 67 Teilen Diisooctylphthalat und 5 Teilen Cocosöl, das mit 7 M Ethylenoxid umgesetzt wurde, zu einer Fließfähigen Paste.

Die so hergestellte Paste eignet sich sehr gut zur Einfärbung von ungesättigten Polyesterharzen aus Phthalsäure, Maleinsäure oder Adipinsäure und Glykolen. Das Einfärben kann unter Mitverwendung eines Rührwerks oder von Hand vorgenommen werden, wobei die Farbpaste direkt in das ungesättigte Polyesterharz eingerührt wird. Nach dem Aushärten werden stippenfreie, transparente Färbungen in diesem Kunststoff erzielt.

Beispiel 4

15 Teile Ruß wurden mit 15 Teilen Di-n-butylphthalat in einem Dispersionskneter so lange bearbeitet, bis die Agglomerate dispergiert und eine durchschnittliche Teilchengröße der Rußpartikel von 25 nm erreicht ist. Anschließend wird mit 68 Teilen Di-n-butylphthalat und 23 Teilen Trioleoylglycerin, das mit 6 M Ethlenoxid um gesetzt wurde, zu einer fließfähigen Paste verdünnt.

Diese eignet sich sehr gut für das Einfärben von Polystyrol. Bei Einfärbungen in einem Überkopfmischer oder Turbomischer wird der unangenehme Flugruß, der üblicherweise bei Arbeiten mit Rußen auf Pulverbasis eintritt, vermieden. Außerdem ist bei diesem Arbeitsgang ein zusätzliches Dispergierungsmittel nicht notwendig. Die eingefärbten Polystyrolmuster zeigen eine glatte, stippenfreie Oberfläche.

Beispiel 5

70 Teile Titandioxid werden mit 27 Teilen Diisooctyladipat und 3 Teilen Ricinusöl, das mit 4 M Ethylenoxid umgesetzt wurde, vermischt und über einen Ein- oder Mehrwalzenstuhl abgerieben. Die fließbare Paste eignet sich sehr gut zur Einfärbung von Polyolefinen.

Die Einfärbungen können in einem Überkopfmischer oder Turbomischer vorgenommen werden. Bei der Weiterverarbeitung auf Extrudern oder Spritzgußmaschinen wird in Gegensatz zu Trockenpigmenten kein Absetzen in der Knetschnecke beobachtet. Darüber hinaus können automatische Füllvorrichtungen das so vorgefärbte Kunststoffgranulat ohne Förderschwierigkeiten verarbeiten.

Beispiel 6

25 Teile des Azopigmentes, das durch Kupplung von 1 M tetrazotiertem 3,5,3',5'-Tetrachlorbenzidin auf 2 M Acetessig-m-xylidid hergestellt wurde, werden mit 70 Teilen Di-iso-nonyladipat und 5 Teilen Trioleoylglycerin, das mit 5 M Ethylenoxid umgesetzt wurde, vermischt und auf einem Einwalzen- bzw. Mehrwalzenstuhl in 1—2 Passagen abgerieben. Die Pastenherstellung kann auch in einer Kugelmühle vorgenommen werden, indem diese bis zu einem Dirttel mit diesem Pigment-Weichmachergemisch und einem Drittel geeigneter Kugeln gefüllt wird.

Die erhaltene fließbare Paste eignet sich sehr gut zum Einfärben von Polymethacrylat. Soweit dieser Kunststoff in Granulatform anfällt, kann das Einfärben in einem Überkopfmischer oder Turbomischer vorgenommen werden. Soll das Ausgangsmonomere eingefärbt werden, so kann die Farbpaste in dan Acrylsäuremethylester eingerührt werden. Nach Zusatz geeigneter Katalysatoren wird dann polymerisiert. Die nach den beiden erwähnten Verfahren erzielten Färbungen sind bei Zusätzen bis ca. 0,2% Farbpaste zu Kunststoff oder monomerem Ausgangsmaterial noch transparent. Bei Zusätzen von ca. 0,5% und mehr werden gedeckte Färbungen erzielt.

## Patentansprüche

1. Farbmittelpräparation enthaltend

A) ein im Wasser schwer- oder unlösliches Farbmittel,
B) einen Weichmacher auf Esterbasis und
C) ein Umsetzungsprodukt eines Glycerinfettsäureesters mit Ethylenoxid.

2. Präparationen gemäß Anspruch 1 enthaltend, bezogen auf das Gesamtgewicht der Komponenten A+B+C, 5—70 Gew.-% A, 30—95 Gew.-% B und 0,1—10 Gew.-%.

3. Präparationen gemäß Anspruch 1, enthaltend, bezogen auf das Gesamtgewicht der Komponenten A+B+C, 10—60 Gew.-% A, 40—90 Gew.-% B und 0,5—5 Gew.-% C.

4. Präparation gemäß den Ansprüche 1—3, enthaltend ein Pigment.

5. Präparation gemäß den Ansprüchen 1—4, enthaltend einen Adipinsäureester.

6. Präparation gemäß den Ansprüchen 1—5, enthaltend eine Umsetzungsprodukt eines Fetts und/oder Esteröls mit Ethylenoxid.

7. Präparationen gemäß den Ansprüchen 1—5 enthaltend Ricinusöl das pro M mit 4 bis 10 M Ethylenoxid umgesetzt ist.

8. Verfahren zur Herstellung einer Präparation gemäß den Ansprüchen 1—7, dadurch gekennzeichnet, daß man einin Wasser schweroder unlösliches Farbmittel, einen Weichmacher auf Esterbasis und ein Umsetzungsprodukt eines Glycerinfettsäureesters mit Ethylenoxid in Naßzerkleinerungsaggregaten in an sich bekannter Weise vermischt.

9. Verwendung der Präparationen gemäß den Ansprüchen 1—7 zum Färben und Pigmentieren von Kunststoffen, insbesondere Thermoplasten.

## Revendications

1. Composition de colorant contenant:

A) un colorant peu soluble ou insoluble dans l'eau,
B) unplastifiant à base d'ester et
C) un produit de réaction d'un ester d'acide gras du glycérol avec l'oxyde d'éthylène.

2. Compositions selon la revendication 1, contenant 5—70% en poids de A, 30—95% en poids de B et 0,1—10% en poids de C, par rapport au poids total des composants A+B+C.

3. Compositions selon la revendication 1, contenant 10—60% en poids de A, 40—90% en poids de B et 0,5—5% en poids de C, par rapport au poids total des composants A+B+C.

4. Composition selon les revendications 1—3 contenant un pigment.

5. Composition selon les revendications 1—4 contenant un ester d'acide adipique.

6. Composition selon les revendication 1—5 contenant un produit de réaction d'une graisse et/ou d'une huile—ester avec l'oxyde d'éthylène.

7. Compositions selon les revendications 1—5 contenant de l'huile de ricin, que l'on a fait réagir avec 4 à 10 moles d'oxyde d'éthylène par mole.

8. Procédé pour la fabrication d'une composition selon les revendication 1—7, caractérisé en ce que l'on mélange de manière connue dans des appareils de broyage humide un colorant peu soluble ou insoluble dans l'eau, un plastifiant à base d'ester et un produit de réaction d'un ester d'acide gras du glycérol avec l'oxyde d'éthylène.

9. Utilisation des compositions selon les revendication 1—7 pour la coloration et la pigmentation de matières plastiques, en particulier des matières thermoplastiques.

## Claims

1. Colorant preparation containing

A) a colorant which is sparingly soluble or insoluble in water,
B) a plasticiser based on an ester and
C) a reaction product of a glycerol fatty acid ester and ethylene oxide.

2. Preparations according to Claim 1 containing, relative to the total weight of components A+B+C, 5—70% by weight of A, 30—95% by weight of B and 0.1—10% by weight.

3. Preparations according to Claim 1 containing, relative to the total weight of components A+B+C, 10—60% by weight of A, 40—90% by weight of B and 0.5—5% by weight of C.

4. Preparations according to Claims 1—3 containing a pigment.

5. Preparation according to Claims 1—4 containing an adipic acid ester.

6. Preparation according to Claims 1—5 containing a reaction product of a fat and/or ester-oil and ethylene oxide.

7. Preparations according to Claims 1—5 containing castor oil which, per m., has been reacted with 4 to 10 m. of ethylene oxide.

8. Process for the production of a preparation according to Claims 1—7, characterised in that a colorant which is sparingly soluble or insoluble in water, a plasticiser based on an ester, and a reaction product of a glycerol fatty acid ester and ethylene oxide are mixed in wet comminution units in a manner known per se.

9. Use of the preparations according to Claims 1—7 for colouring and pigmenting plastics, in particular thermoplastics.